# EUROPEAN PATENT SPECIFICATION

(11) **EP 1 064 212 B1**
(45) Date of publication and mention of the grant of the patent: **11.12.2002**
(21) Application number: 99900706.5
(22) Date of filing: 12.01.1999
(51) Int. Cl.: B65G 47/51

(54) **ASSEMBY OF A SUPPLY CONVEYOR, A BUFFER CONVEYOR AND A DISCHARGE CONVEYOR, AND A BUFFER CONVEYOR TO BE USED IN SUCH AN ASSEMBLY**
ANORDNUNG EINES ZUFÖRDERERS, EINES SPEICHERFÖRDERERS UND EINES ABFÖRDERERS, SOWIE SPEICHERFÖRDERER ZUR VERWENDUNG IN EINER SOLCHEN ANORDNUNG
ENSEMBLE CONVOYEUR TRANSPORTEUR, CONVOYEUR TAMPON ET CONVOYEUR DECHARGEUR, ET CONVOYEUR TAMPON UTILISABLE DANS LEDIT ENSEMBLE

(30) Priority: 21.01.1998 NL 1008076
(43) Date of publication of application: 03.01.2001
(73) Proprietor: Kaak, Johan Hendrik Bernard, 7011 DZ Gaanderen (NL)
(72) Inventor: PASCH, Lothar, NL-7061 WV Terborg (NL)
(74) Representative: De Hoop, Eric
(86) International application number: NL9900017
(87) International publication number: WO99037564

(56) References cited:
- DE-A- 19 534 953
- DE-B- 1 059 373
- FR-A- 2 223 945
- US-A- 4 284 187

## Description

The present invention relates to an assembly of a supplying conveyance means with an output end, a discharging conveyance means with an input end and a buffer device with an input end and an output end placed between the supplying conveyance means and the discharging conveyance means, the supplying conveyance means conveying a product in a supply direction to the buffer device and the discharging conveyance means discharging a product from the buffer device in a discharge direction, the buffer device being provided with a number of buffer conveyance means placed above each other, each of the buffer conveyance means having an input end and an output end, and the buffer device further being provided with a lifting device for moving the buffer conveyance means up and down. Such an assembly is for instance known from US Patent US-A-4 284 187 (U.KRAMER et al.), base for the preamble of claims 1 and 4.

Such assemblies have been used for a long time in for instance the bread industry, but also in other industries, for instance to supply loafs of bread to the buffer device by the supplying conveyance means, in which buffer device said loafs are temporarily stored before being discharged out of the buffer device by the discharging conveyance means, to a device for further processing the loafs, for instance for cutting and wrapping the baked loafs. Such an assembly with buffer device is necessary, as the processing devices after the buffer device work intermittently and with another speed than the supplying conveyance means, so that a buffer device is essential. The known buffer device consists of a number of buffer conveyance means placed above each other and parallel to each other. Each of the buffer conveyance means has an input end and an output end. The known buffer device further consists of a lifting device for moving the buffer conveyance means up an down in its entirety. In this way the buffer device can be placed such with respect to the discharge end of the supplying conveyance means that the input end of one of the buffer conveyance means is placed next to the output end of the supplying conveyance means, as a result of which for instance loafs can be transferred from the supplying conveyance means to the one buffer conveyance means. When the one buffer conveyance means is full, the lifting device is operated such that another buffer conveyance means, which is not filled yet, is placed with its input end next to the output end of the supplying conveyance means, after which said other buffer conveyance means can be filled with loafs. When the device for further processing the loafs, which device is placed after the buffer device, needs loafs, the lifting device is operated such that the output end of one of the buffer conveyance means is placed with its output end next to the input end of the discharging conveyance means, so that the buffered loafs of said one buffer conveyance means can be transferred to the discharging conveyance means. As a result of the different working speeds of the supplying conveyance means and the discharging conveyance means (that is the working speed of the further device) it is necessary here that during the supply of loafs to the buffer device the discharging conveyance means is stopped, and that during discharging loafs out of the buffer device the supplying conveyance means is stopped which is a drawback.

It is an object of the present invention to provide an assembly of a supplying conveyance means with an output end, a discharging conveyance means with an input end and a buffer device with an input end and an output end placed between the supplying conveyance means and the discharging conveyance means, which assembly can for instance be used in the bread processing line, with which the gaps in the supply of products and failures in the discharge of the products (or failures in the further processing device) can be taken care of and eliminated.

To that end an assembly of the kind described above according to the invention is characterized in that the lifting device of the buffer device comprises a first lifting means for moving the input end of the buffer device up and down and a second lifting device for moving the output end of the buffer device up and down, the first and the second lifting means being independently driveable from each other. In this way it is possible that the buffer conveyance means of the buffer device are placed in an oblique position, so that the input end of one of the buffer conveyance means is placed next to the output end of the supplying conveyance means, whereas the output end of another buffer conveyance means is placed next to the input end of the discharging conveyance means. In this way not only the possibility is provided to take care of gaps in the supply of products or failures in the processing devices placed after the buffer device, but it is also possible in this way that supplying products into the buffer device and discharging products out of the buffer device can take place simultaneously, continuously and even at different speeds. There is also the possibility to place merely one product on the discharging conveyance means when this is desirable for taking care of failures.

In a preferred embodiment of an assembly according to the invention the supplying conveyance means, the discharging conveyance means and each of the buffer conveyance means comprise a conveyance track. Such a conveyance track can depending on the construction be a driven or a non-driven conveyance track.

In a further preferred embodiment of an assembly according to the invention, in which the supplying conveyance means is driven by a supplying conveyance means drive, the discharging conveyance means is driven by a discharging conveyance means drive and each of the buffer conveyance means is driven by a respective buffer conveyance means drive, the supply conveyance means drive, the discharging conveyance means drive and each of the buffer conveyance means drives are independently driveable from each other.

The invention further relates to a buffer device suitable for use in an assembly according to the invention.

Some exemplary embodiments of the invention will by way of example be described below on the basis of the drawing, in which:
Figure 1 shows an assembly according to the invention in which the buffer conveyance means of the buffer device are placed horizontally, and in which both the supplying and the discharging conveyance means are driven,
Figure 2 shows an assembly according to figure 1, in which the buffer conveyance means of the buffer device are moved one mutual distance upwards, in which the supplying conveyance means is driven and the discharging conveyance means has stopped,
Figure 3 shows an assembly according to figure 2, in which the supplying conveyance means has stopped and the discharging conveyance means is driven,
Figure 4 shows an assembly according to the invention in which the buffer conveyance means of the buffer device are placed obliquely, and in which both the supplying and the discharging conveyance means are driven, and
Figure 5 shows an assembly according to the invention in which the buffer conveyance means of the buffer device are placed obliquely in the other direction in relation to figure 4, and in which both the supplying and the discharging conveyance means are driven.

The present invention will be described on the basis of driven conveyor belts as the supplying, discharging and buffer conveyance means, although it will be clear that other conveyance means, non-driven conveyance tracks as well, can also be used. Furthermore the invention will be described on the basis of supplying products to and discharging them out of the buffer device, in which it will be clear that the assembly and the buffer device according to the invention can be used for all sorts of products, such as bread, cake, machine parts and the like.

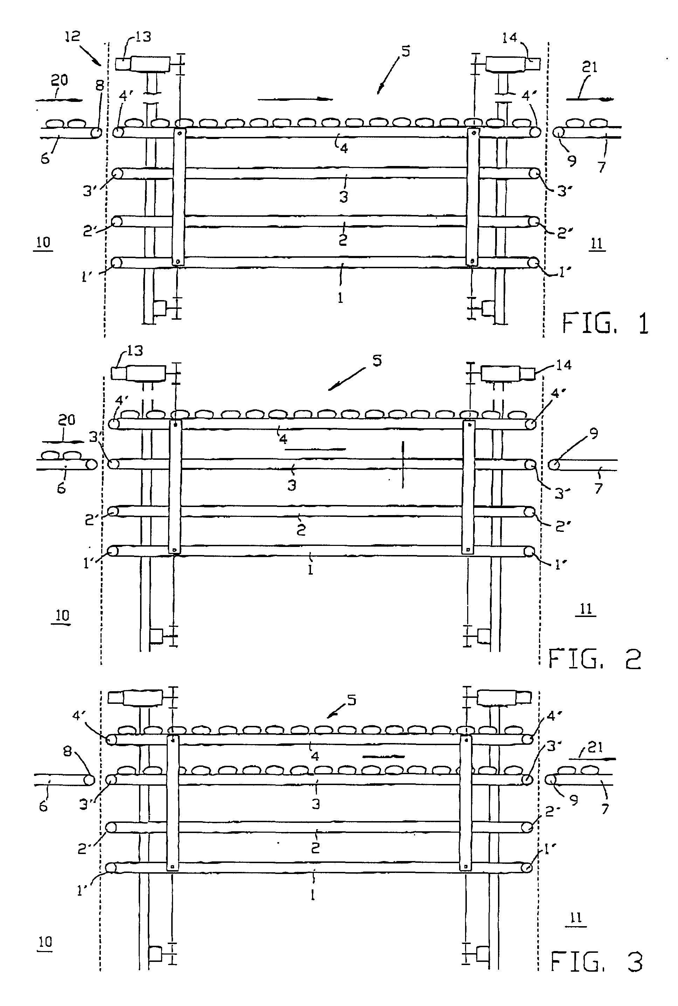

Figure 1 shows an assembly according to the invention in which buffer conveyor belts 1, 2, 3, 4 (another number than four is also possible) of a buffer device 5 have been placed horizontally, and in which both a supplying 6 and a discharging conveyor belt 7 are driven. The supplying conveyor belt 6 has an output end 8, the discharging conveyor belt 7 has an input end 9 and the buffer device 5 has an input end 10 and an output end 11. The buffer device 5 is placed between the supplying conveyor belt 6 and the discharging conveyor belt 7.

The assembly as mentioned above, can for instance be used in a bread processing line, in which for instance loafs of bread are cut and wrapped, although the assembly can also be used in other dough processing activities, and other products.

When the processing speed of the supplying conveyor belt 6 and the discharging conveyor belt 7 are the same, the supplying conveyor belt 6 conveys a product in a supply direction 20 to the buffer device 5, the buffer conveyor belt 4 conveys the products through the buffer device 5 and the discharging conveyor belt 7 discharges the product in a discharge direction 21.

When, however, a difference between the processing speeds between the discharge belt 7 and the supply belt 6 occurs, or even when one of the belts comes to a standstill, it may be necessary that the buffer device 5 acts buffering. To that end the buffer device 5 is provided with a number of buffer conveyor belts 1, 2, 3 and 4 placed above each other and for instance parallel to each other, in which each of the buffer conveyor belts 1, 2, 3 and 4 has its own input end 1', 2', 3' and 4' and its own output end 1", 2", 3" and 4". Furthermore the buffer device 5 is provided with a lifting device 12 for moving the buffer conveyor belts up and down. The lifting device 12 of the buffer device comprises a first lifting means 13 for moving the input end 10 of the buffer device 5 up and down and a second lifting device 14 for moving the output end 11 of the buffer device 5 up and down, in which the first and second lifting means 13, 14 can be driven independently from each other.

Figure 2 shows the assembly according to claim 1, in which the buffer conveyor belts of the buffer device 5 in their entirety are moved one mutual distance upwards. The buffer device 5 according to the invention in this case acts analogous to the known buffer devices. The buffer conveyor belt 4 is completely filled with products, and the buffer conveyor belt 3 is placed with its input end 3' next to the output end 8 of the supplying conveyor belt 6. Said belt is driven so that products can be transferred into the buffer device 5. The discharging conveyor belt 7 has stopped.

Figure 3 shows an assembly according to figure 2, in which the buffer conveyor belt 3 is filled with products and in which the supplying conveyor belt 6 has stopped and the discharging conveyor belt 7 is driven, for removing products out of the buffer device. As explained above such a use has drawbacks in some cases. An additional drawback occurs with food products such as loafs, because some loafs remain in the buffer device longer than others, as a result of which no uniform quality is obtained.

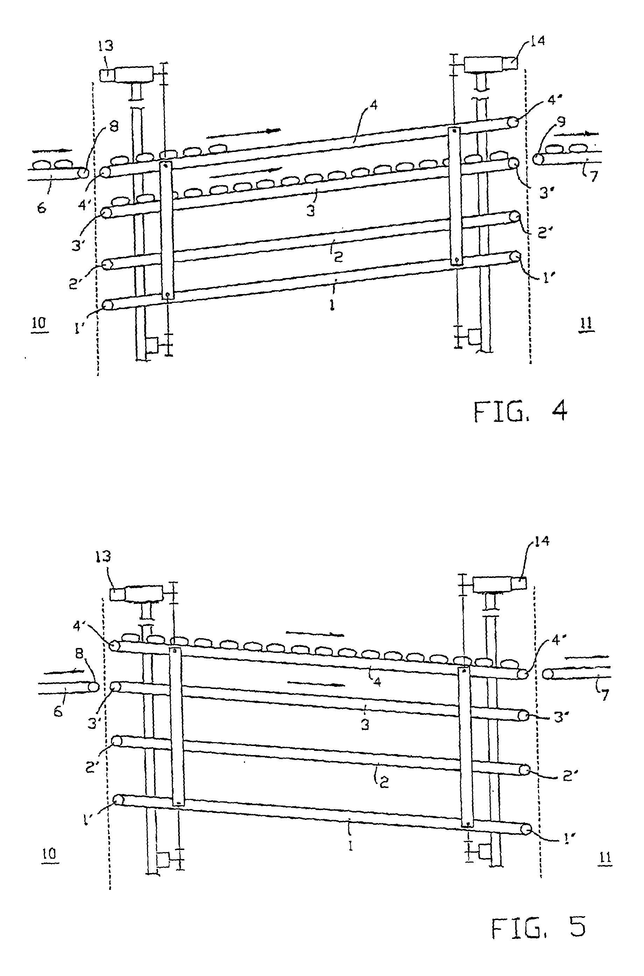

Figure 4 shows the assembly according to the invention in which these problems are solved. The buffer conveyor belts 3 and 4 are placed obliquely as a result of suitable operation of the lifting means 13 and 14 of the buffer device, so that as indicated loafs can both be supplied to and discharged out of the buffer device simultaneously. This provides a possibility to take care of gaps in the supply of the products, of failures in the processing of the products which take place after the buffer device, as well as to both supply and discharge continuously. An improvement of the uniformity of the foodstuff quality can also be realized. It is also possible in a simple manner to have the supplying conveyor belt and the discharging conveyor belt work at different speeds.

Figure 5 shows the assembly according to the invention in which the buffer conveyor belts of the buffer device are placed obliquely in the other direction relative to figure 4.

According to the invention it is therefore possible that the buffer conveyor belts 3, 4 (see figure 5) of the buffer device are placed in an oblique position, so that the input end 3' of one of the buffer conveyor belts 3 is placed next to the output end 8 of the supplying conveyor belt 6, whereas the output end 4" of another buffer conveyor belt 4 is placed next to the input end 9 of the discharging conveyor belt 7. The assembly according to the invention can also be used in the conventional manner.

The invention also relates to a separate commercially tradeable buffer device suitable for use in an assembly according to the invention.

It will be clear that only the characteristics of the assembly and the buffer device that are essential to the invention have been described, and that a person skilled in the art can of course bring the invention into practice on the basis of the description. For instance the lifting device has among others not been described, as it will be clear to the expert that the lifting means of the lifting device can each be formed by chain lines known per se, but also that lifting cylinders and the like can be used to move the input end and the output end of the buffer device up and down. Furthermore it is clear to a person skilled in the art that in case of driven conveyor tracks, the supplying conveyance means will be driven by a supplying conveyance means drive, the discharging conveyance means is driven by a discharging conveyance means drive and each of the buffer conveyance means is driven by a respective buffer conveyance means drive. In order to have the assembly of the invention function optimally it is preferred that the supplying conveyance means drive, the discharging conveyance means drive and each of the buffer conveyance means drives can be driven independently from each other, the exact realisation of which can of course be realised by a person skilled in the art.

## Claims

1. Assembly of a supplying conveyance means (6) with an output end (8), a discharging conveyance means (7) with an input end (10) and a buffer device (5) with an input end (10) and an output end (11) placed between the supplying conveyance means (6) and the discharging conveyance means (7), the supplying conveyance means (6) conveying a product in a supply direction to the buffer device (5) and the discharging conveyance means (7) discharging a product from the buffer device (5) in a discharge direction, the buffer device (5) being provided with a number of buffer conveyance means (1, 2, 3, 4) placed above each other, each of the buffer conveyance means (1, 2, 3, 4) having an input end and an output end, and the buffer device (5) further being provided with a lifting device (12) for moving the buffer conveyance means (1, 2, 3, 4) up and down, **characterized in that** the lifting device of the buffer device comprises a first lifting means (13) for moving the input end of the buffer device (5) up and down and a second lifting means (14) for moving the output end of the buffer device up and down, the first and the second lifting means (13, 14) being independently driveable from each other.

2. Assembly according to claim 1, **characterized in that** the supplying conveyance means, (6) the discharging conveyance means (7) and each of the buffer conveyance means (1, 2, 3, 4) comprise a conveyance track.

3. Assembly according to claim 1 or 2, the supplying conveyance means (6) being driven by a supplying conveyance means drive, the discharging conveyance means (7) being driven by a discharging conveyance means drive and each of the buffer conveyance means (1, 2, 3, 4) being driven by a respective buffer conveyance means drive, **characterized in that** the supply conveyance means drive, the discharging conveyance means drive and each of the buffer conveyance means drives are independently driveable from each other.

4. Buffer device suitable for use in an assembly according to claim 1, 2 or 3, which buffer device (5) is provided with an input end and an output end, the buffer device being provided with a number of buffer conveyance means (1, 2, 3, 4) placed above each other, each of the buffer conveyance means having an input end (1', 2', 3', 4') and an output end (1", 2", 3", 4") and the buffer device further being provided with a lifting device (12) for moving the buffer conveyance means up and down, **characterised in that** the lifting device (12) of the buffer device comprises a first lifting means (13) for moving the input end of the buffer device up and down and a second lifting means (14) for moving the output end of the buffer device up and down, the first and second lifting means (13, 14) being independently driveable from each other.

## Patentansprüche

1. System eines Zufördermittels (6) mit einem Ausgabeende (8), eines Abfördermittels (7) mit einem Eingabeende (9) und einer zwischen dem Zufördermittel (6) und dem Abfördermittel (7) angeordneten Puffervorrichtung (5) mit einem Eingabeende (10) und einem Ausgabeende (11), wobei das Zufördermittel (6) ein Produkt in eine Zufuhrrichtung zu der Puffervorrichtung (5) befördert und das Abfördermittel (7) ein Produkt von der Puffervorrichtung (5) in eine Abfuhrrichtung abführt, wobei die Puffervorrichtung (5) mit einer Anzahl von obeneinander angeordneten Pufferfördermitteln (1, 2, 3, 4) versehen ist, wobei jedes der Pufferfördermittel (1, 2, 3, 4) ein Eingabeende und ein Ausgabeende hat, und wobei die Puffervorrichtung (5) weiter mit einer Hebevorrichtung (12) zum nach oben und unten Bewegen der Pufferfördermittel (1, 2, 3, 4) versehen ist, **dadurch gekennzeichnet, daß** die Hebevorrichtung der Puffervorrichtung ein erstes Hebemittel (13) zum nach oben und unten Bewegen des Eingabeendes der Puffervorrichtung (5) und ein zweites Hebemittel (14) zum nach oben und unten Bewegen des Ausgabeendes der Puffervorrichtung umfaßt, wobei die ersten und zweiten Hebemittel (13, 14) unabhängig voneinander anzutreiben sind.

2. System nach Anspruch 1, **dadurch gekennzeichnet, daß** das Zufördermittel (6), das Abfördermittel (7) und jedes der Pufferfördermittel (1, 2, 3, 4) eine Förderstrecke umfassen.

3. System nach Anspruch 1 oder 2, wobei das Zufördermittel (6) von einem Zufördermittelantrieb angetrieben wird, das Abfördermittel (7) von einem Abfördermittelantrieb angetrieben wird, und jedes der Pufferfördermittel (1, 2, 3, 4) von einem jeweiligen Pufferfördermittelantrieb angetrieben wird, **dadurch gekennzeichnet, daß** der Zufördermittelantrieb, der Abfördermittelantrieb und jeder der Pufferfördermittelantriebe unabhängig voneinander anzutreiben sind.

4. Puffervorrichtung geeignet für Gebrauch in einem System nach Anspruch 1, 2 oder 3, welche Puffervorrichtung (5) mit einem Eingabeende und einem Ausgabeende versehen ist, wobei die Puffervorrichtung mit einer Anzahl von obeneinander angeordneten Pufferfördermitteln (1, 2, 3, 4) versehen ist, wobei jedes der Pufferfördermittel ein Eingabeende (1', 2', 3', 4') und ein Ausgabeende (1", 2", 3", 4") hat und wobei die Puffervorrichtung weiter mit einer Hebevorrichtung (12) zum nach oben und unten Bewegen der Pufferfördermittel versehen ist, **dadurch gekennzeichnet, daß** die Hebevorrichtung (12) der Puffervorrichtung ein erstes Hebemittel (13) zum nach oben und unten Bewegen des Eingabeendes der Puffervorrichtung und ein zweites Hebemittel (14) zum nach oben und unten Bewegen des Ausgabeendes der Puffervorrichtung umfaßt, wobei die ersten und zweiten Hebemittel (13, 14) unabhängig voneinander anzutreiben sind.

## Revendications

1. Ensemble d'un moyen de convoyage d'alimentation (6) avec une extrémité de sortie (8), d'un moyen de convoyage d'évacuation (7) avec une extrémité d'entrée (9) et d'un dispositif de tampon (5) avec une extrémité d'entrée (10) et une extrémité de sortie (11) placé entre le moyen de convoyage d'alimentation (6) et le moyen de convoyage d'évacuation (7), le moyen de convoyage d'alimentation (6) convoyant un produit dans un sens d'alimentation au dispositif de tampon (5) et le moyen de convoyage d'évacuation (7) évacuant un produit à partir du dispositif de tampon (5) dans un sens d'évacuation, le dispositif de tampon (5) étant pourvu d'un certain nombre de dispositifs de convoyage tampons (1, 2, 3, 4) placés l'un au-dessus de l'autre, chacun des dispositifs de convoyage tampons (1, 2, 3, 4) présentant une extrémité d'entrée et une extrémité de sortie et le dispositif de tampon (5) étant de plus muni d'un dispositif élévateur (12) destiné à déplacer les moyens de convoyage tampon (1, 2, 3, 4) vers le haut et vers le bas, **caractérisé en ce que** le dispositif élévateur du dispositif de tampon comprend un premier moyen élévateur (13) destiné à déplacer l'extrémité d'entrée du dispositif de tampon (5) vers le haut et vers le bas et un deuxième moyen élévateur (14) destiné à déplacer l'extrémité de sortie du dispositif de tampon vers le haut et vers le bas, les premier et deuxième moyens élévateurs (13, 14) pouvant être entraînés indépendamment l'un de l'autre.

2. Ensemble selon la revendication 1, **caractérisé en ce que** le moyen de convoyage d'alimentation (6), le moyen de convoyage d'évacuation (7) et chacun des moyens de convoyage tampons (1, 2, 3, 4) comprennent une piste de convoyage.

3. Ensemble selon la revendication 1 ou 2, le moyen de convoyage d'alimentation (6) étant entraîné par un moyen d'entraînement de convoyage d'alimentation, le moyen de convoyage d'évacuation (7) étant entraîné par une transmission d'entraînement de moyen de convoyage d'évacuation et chacun des moyens de convoyage tampons (1, 2, 3, 4) étant entraîné par une transmission d'entraînement de moyen de convoyage tampon respectif, **caractérisé en ce que** la transmission d'entraînement du moyen de convoyage d'alimentation, la transmission d'entraînement du moyen de convoyage d'évacuation et chacune des transmissions d'entraînement de moyen de convoyage tampon peuvent être entraînées indépendamment l'une de l'autre.

4. Dispositif de tampon convenant à l'utilisation dans un ensemble selon la revendication 1, 2 ou 3, dans lequel le dispositif de tampon (5) est pourvu d'une extrémité d'entrée et d'une extrémité de sortie, le dispositif de tampon étant pourvu d'un certain nombre de moyens de convoyage tampons (1, 2, 3, 4) placés l'un au-dessus de l'autre, chacun des moyens de convoyage tampons comportant une extrémité d'entrée (1', 2', 3', 4') et d'une extrémité de sortie (1", 2", 3", 4") et le dispositif de tampon étant de plus pourvu d'un dispositif élévateur (12) pour déplacer le moyen de convoyage tampon vers le haut et vers le bas, **caractérisé en ce que** le dispositif élévateur (12) du dispositif de tampon comprend un premier moyen élévateur (13) destiné à déplacer l'extrémité d'entrée du dispositif de tampon vers le haut et vers le bas et un deuxième moyen élévateur (14) destiné à déplacer l'extrémité de sortie du dispositif de tampon vers le haut et vers le bas, les premier et deuxième moyens élévateurs (13, 14) pouvant être entraînés indépendamment l'un de l'autre.
